# EUROPEAN PATENT SPECIFICATION

(11) **EP 1 061 701 B1**
(45) Date of publication and mention of the grant of the patent: **01.04.2015**
(21) Application number: 00900436.7
(22) Date of filing: 18.01.2000
(51) Int. Cl.: H04L 29/08, H04L 12/58, H04W 4/12, H04L 12/18

(54) **Mobile terminal and data transmission scheme for receiving messages**
Mobiles Endgerät und Datenübertragungschema zum Nachrichtenempfang
Terminal mobile et schéma de transmission de données pour la reception des messages

(30) Priority: 19.01.1999 JP 1035299
(43) Date of publication of application: 20.12.2000
(73) Proprietor: Panasonic Corporation, Kadoma-shi Osaka 571-8501 (JP); Panasonic Mobile Communications Co., Ltd., Yokohama-shi, Kanagawa 223-8639 (JP); NTT DoCoMo, Inc., Tokyo 100-6150 (JP)
(72) Inventor: Y0nemoto, Yoshifumi, Yokohama-shi Kanagawa 233-0007 (JP); Wada, Hiromi, Neyagawa-shi, Osaka 572-0841 (JP); Hirose, Takako, Hirakata-shi, Osaka 573-0171 (JP); Kato, Atsunobu, Ebina-shi, Kanagawa 243-0411 (JP); Nakatsuchi, Masaharu, Yokohama-shi, Kanagawa 221-0861 (JP); Chiba, Koji, Yokohama-shi, Kanagawa 236-0032 (JP)
(74) Representative: Grünecker, Kinkeldey, Stockmair & Schwanhäusser
(86) International application number: PCT/JP2000/000206
(87) International publication number: WO 2000/044136

(56) References cited:
- JP-A- 7 079 248
- JP-A- 10 013 545
- JP-A- 10 161 949
- JP-A- 10 190 879
- JP-A- 10 290 255
- US-A- 5 444 438
- US-A- 5 448 759
- US-A- 5 463 382
- US-A- 5 705 995
- US-A- 5 734 903
- KRESKEN T: "Überblick Push-Technologie" February 1998 (1998-02), , XP002198350 * the whole document *
- STAJANO F ET AL: "THE THINNEST OF CLIENTS: CONTROLLING IT ALL VIA CELLPHONE" MOBILE COMPUTING AND COMMUNICATIONS REVIEW, ACM, NEW YORK, NY, US, vol. 2, no. 4, October 1998 (1998-10), pages 46-53, XP000784003 ISSN: 1091-1669
- Nikkei Communication, No. 265, (Japan), Nikkei BP. K.K., (02.03.98), pages 136-144 XP002930205
- SHADANHOJIN DENKI TSUSHIN KYOKAI NTT DOCOMO TECHNICAL JOURNAL vol. 7, no. 2, 01 July 1999, JAPAN, pages 22 - 27, XP002930206

## Description

### Technical Field

The present invention relates to a mobile terminal and a data transmission scheme, and more particularly, to a mobile terminal and a data transmission scheme adapted to allow PUSH messages to be delivered from a server to a client (the mobile terminal) equipped with small data memory.

### Background Art

In information communications in the advanced information-oriented society today, users can acquire a variety of information on demand by specifying the destination address on the Internet.

As a data transfer protocol between a server and a client, the HTTP (Hypertext Transfer Protocol) is in widespread use.

By using the HTTP, the server responds to the client's request for information and notifies the user of the target information, allowing the user to acquire such information.

In recent years, not only PULL services where a client activates a request but also PUSH services where the information source provides the client with information at an arbitrary timing.

This allows information to be provided to users from a predetermined information source without the client having to activate the information sending request.

For example, in the "A data broadcast system and a terminal thereof" disclosed in JP-A-9-148994, a variety of digital signals are transmitted via broadcast data channels and a receiver to receive broadcast data can acquire information in real time.

However, for a mobile terminal whose data memory is relatively small, a problem occurs that the mobile terminal cannot save all the information provided from the information source. This loss in information is a problem in the case of important information such as paid service information and mails.

In view of the foregoing problem, the invention aims at providing a mobile terminal equipped with small data memory and a data transmission scheme which can receive real-time information provided by an information source without fail.

US-A-463382 discloses a system including an infrastructure and a received. The receiver stores a received message in the memory. The infrastructure transmits the receiver information including the length of a pending,message, and the receiver determines a response on whether the pending message can be accepted based on the length of the pending message and memory space available in the memory. The receiver transmits a response to the infrastructure and the infrastructure controls the further processing of the pending message in accordance with the response.

US-A-5448759 discloses that in a communication system, a central processor determines whether a received message is of a first type or second type. When the message is of the first type the processor transmits it to the communication unit via the communication source which is used primarily for the first type transmission. When the message is of the second type the processor prepares a notification and informs a user. If the user wishes to receive the message, a request is sent to the processor.

### Disclosure of the Invention

In order to solve the problem, a mobile terminal according to the invention is disclosed in the present claim 1 and a data transmission scheme according to the invention is defined in the present claim 5. Further embodiments are defined in the dependent claims.

### Brief Description of the Drawings

Fig. 1 shows the configuration of a receiver according to the embodiment of the invention.
Fig. 2 is a first flowchart showing the flow of PUSH message acquisition processing by the receiver according to the embodiment of the invention.
Fig. 3 is a second flowchart showing the flow of PUSH message acquisition processing by the receiver according to the embodiment of the invention.
Fig. 4 is a third flowchart showing the flow of PUSH message acquisition processing by the receiver according to the embodiment of the invention.
Fig. 5 shows an example of a PUSH message incoming notice according to the embodiment of the invention.
Fig. 6 shows an example of a PUSH message acquisition request message according to the embodiment of the invention.
Fig. 7 shows an example of a first PUSH message acquired by a receiving terminal according to the embodiment of the invention.
Fig. 8 shows an example of a second PUSH message acquired by a receiving terminal according to the embodiment of the invention.
Fig. 9 is a sequence diagram showing the processing made between a receiving terminal and a server unit during data transmission made by the mobile terminal and the server via a network.

### Best Mode for Carrying Out the Invention

The embodiment of the invention will be detailed below with reference to attached drawings.

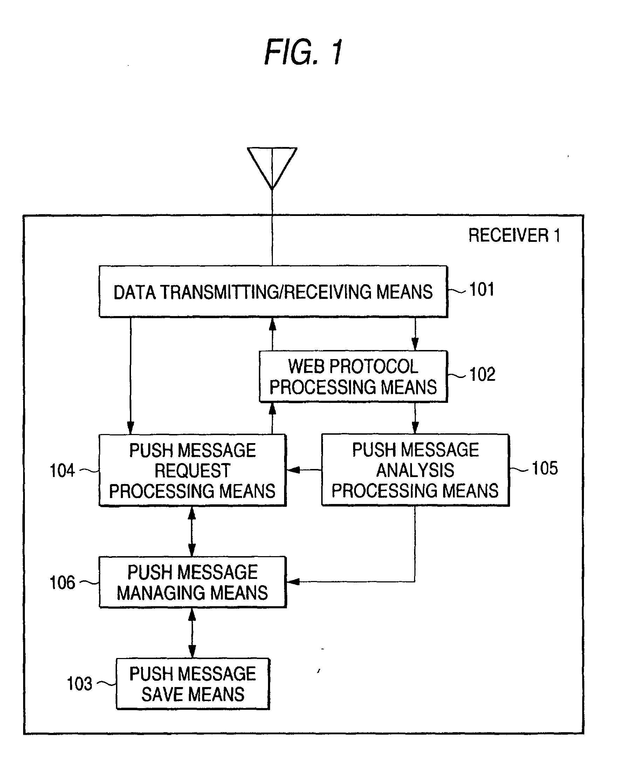

Fig. 1 shows the configuration of a mobile terminal (receiver) according to the embodiment of the invention.

In Fig. 1, a receiver 1 as a mobile terminal is composed of a data transmitting/receiving means 101 for performing data transmission/reception in a portable telephone network, a Web protocol processing means 102 for processing the HTTP which is a Web protocol used to acquire contents messages stored in a server unit between the receiver and the server unit, a PUSH message save means 103 for saving PUSH messages received by the receiver 1, a PUSH message request processing means 104, a PUSH message analysis processing means 105, and a PUSH message managing means 106.

The PUSH message request processing means 104, based on the description on PUSH messages contained in the incoming notice received by the data transmitting/receiving means 101, checks whether available area is present or not in the PUSH message save means 103, and in case it is present, the PUSH message request processing means 104 makes a PUSH message acquisition request to the Web protocol processing means 102.

The PUSH message analysis processing means 105, in response to the PUSH message acquisition request made to the information source server by the PUSH message request processing means 104, performs analysis processing of PUSH messages returned from the server.

The PUSH message managing means 106 saves PUSH messages analyzed by the PUSH message analysis processing means 105 in the PUSH message save means 103. The PUSH message managing means 106, on receiving an inquiry from the PUSH message request processing means 104 about whether available area is present or not in the PUSH message memory, checks whether available area is present or not in the PUSH message save means 103 and notifies the PUSH message request processing means 104 of the presence or absence of available area.

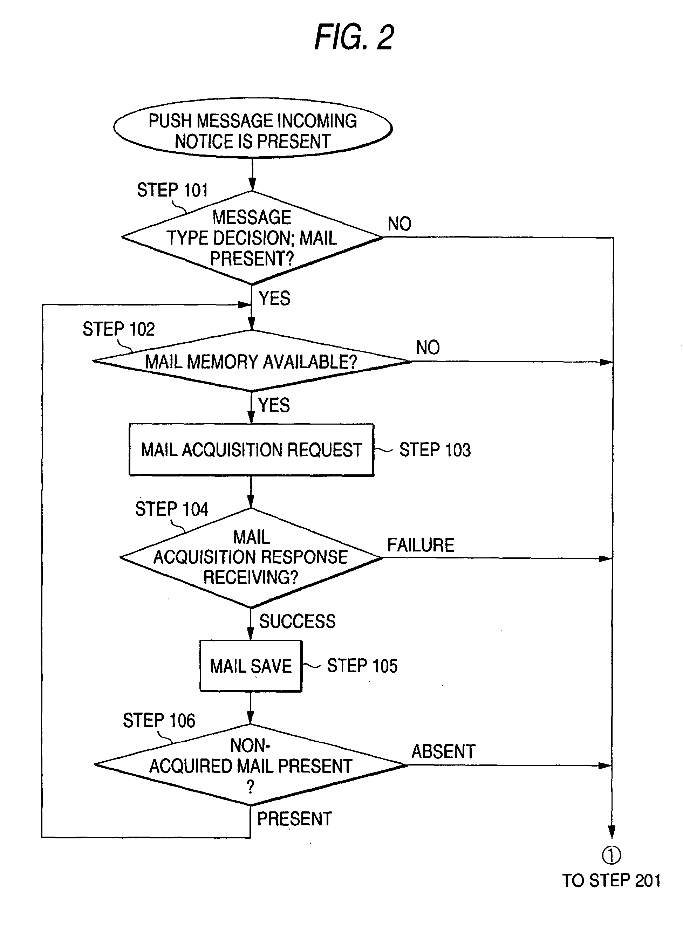

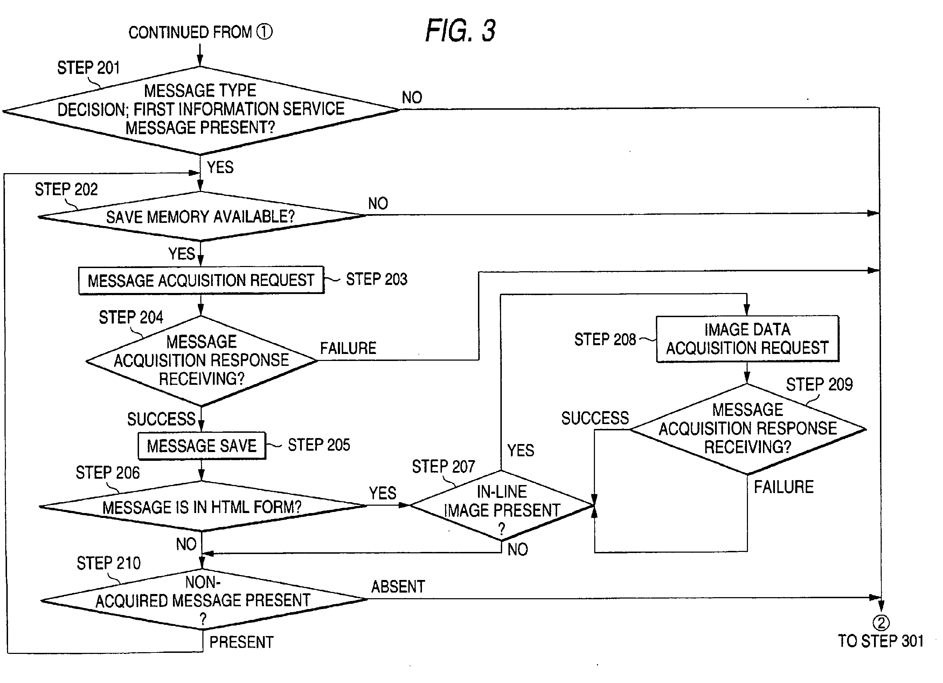

Figs. 2 through 4 are flowcharts showing the flow of PUSH message acquisition processing by the receiver according to the embodiment of the invention. The following describes the flow of PUSH message acquisition processing after the data transmitting/receiving means 101 of the receiver 1 in Fig. 1 has received a PUSH message incoming notice:
Step 101 : The PUSH message request processing means 104 checks the PUSH message type information contained in the PUSH message incoming notice transmitted from the data transmitting/receiving means 101. In case the PUSH message type information contains mails, execution proceeds to step 102. Otherwise, execution proceeds to step 201 in Fig. 3.
Step 102 : The PUSH message request processing means 104 makes an inquiry about presence or absence of the available mail memory to the PUSH message managing means 106. The PUSH message managing means 106 checks for available mail memory in the PUSH message save means 103, and notifies the result of the check for available mail memory. In case available area is present in the mail memory, execution proceeds to step 103. Otherwise, execution proceeds to step 201 in Fig. 3.
Step 103 : The PUSH message request processing means 104 makes an mail acquisition request to the Web protocol processing means 102. The Web protocol processing means 102, based on a request from the PUSH message request processing means 104, creates mail acquisition request data in HTTP format negotiated with the server, then asks the data transmitting/receiving means 101 to send the data. The data transmitting/receiving means 101 sends the data asked by the Web protocol processing means 102 to the server unit, and execution proceeds to step 104.
Step 104 : The data transmitting/receiving means 101, on receiving the data from the server, notifies the received data to the Web protocol processing means 102. The Web protocol processing means 102, on receiving the PUSH messages transmitted from the server unit in accordance with the HTTP format, notifies completion of receiving the PUSH messages to the PUSH message analysis processing means 105. In case the PUSH message analysis processing means 105, based on the PUSH message receiving completion notice from the Web protocol processing means 102, has successfully acquired the mails, execution proceeds to step 105. Otherwise, execution proceeds to step 201 in Fig. 3.
Step 105 : The PUSH message managing means 106, based on the request from the PUSH message analysis processing means 105, saves the received mails in the mail memory in the PUSH message save means 103. Execution then proceeds to step 106.
Step 106 : The PUSH message analysis processing means 105, based on the information about presence or absence of non-acquired mails contained in the received PUSH messages in the server. In case non-acquired mails are present in the server, execution proceeds to step 102. Otherwise, execution proceeds to step 201 in Fig. 3.

Hereinafter, processing for acquiring PUSH messages in accordance with the flowchart in Fig. 3 will be described.

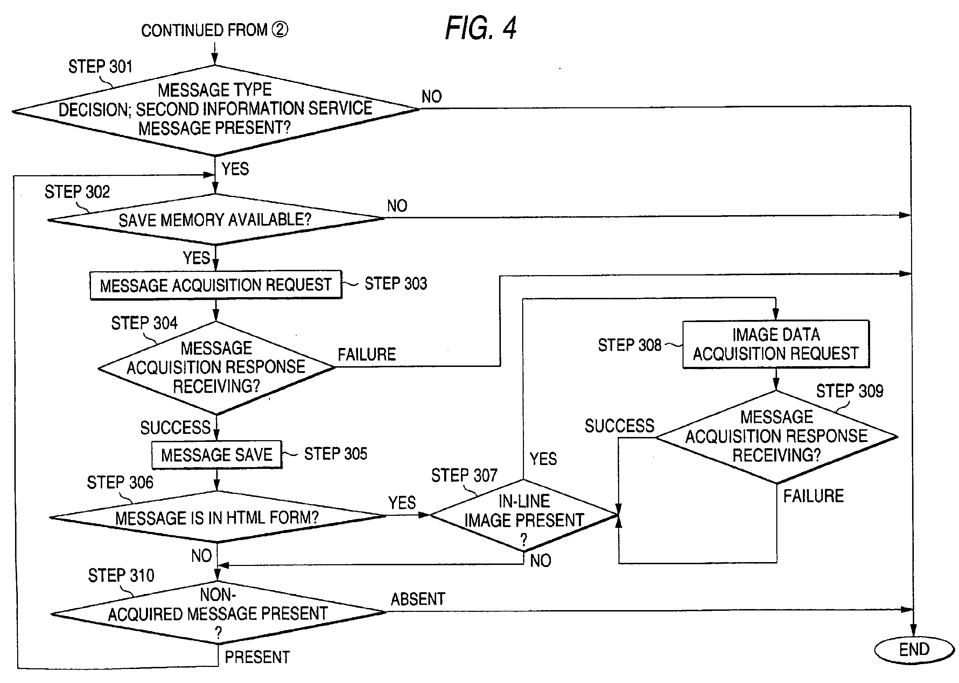

Step 201 : The PUSH message request processing means 104 checks the PUSH message type information contained in the PUSH message incoming notice transmitted from the data transmitting/receiving means 101. In case the PUSH message type information contains the first information service message, execution proceeds to step 202. Otherwise, execution proceeds to step 301 in Fig. 4.

Step 202 : The PUSH message request processing means 104 makes an inquiry about presence or absence of the available area in the memory for the first information service message to the PUSH message managing means 106. The PUSH message managing means 106 checks for available area in the memory of the PUSH message save means 103 for the first information service message, and notifies the result of the check for available memory. In case available memory is present in the memory for the first information service message , execution proceeds to step 203. Otherwise, execution proceeds to step 301 in Fig. 4.

Step 203 : The PUSH message request processing means 104 makes a first information service message acquisition request to the Web protocol processing means 102. The Web protocol processing means 102, based on a request from the PUSH message request processing means 104, creates the first information service message acquisition request data in HTTP format negotiated with the server, then asks the data transmitting/receiving means 101 to send the data. The data transmitting/receiving means 101 sends the data asked by the Web protocol processing means 102 to the server unit, and execution proceeds to step 204.

Step 204 : The data transmitting/receiving means 101, on receiving the data from the server, notifies the received data to the Web protocol processing means 102. The Web protocol processing means 102, on receiving the PUSH messages transmitted from the server in accordance with the HTTP format, notifies completion of receiving the PUSH messages to the PUSH message analysis processing means 105. In case the PUSH message analysis processing means 105, based on the PUSH message receiving completion notice from the Web protocol processing means 102, has successfully acquired the first information service message, execution proceeds to step 205. Otherwise, execution proceeds to step 301 in Fig. 4.

Step 205 : The PUSH message managing means 106, based on the request from the PUSH message analysis processing means 105, saves the received first information service message in the memory for the first information service message in the PUSH message save means 103. Execution then proceeds to step 206.

Step 206 : The PUSH message analysis processing means 105, based on the contents type information contained in the received PUSH message, checks whether the text of the received PUSH message is written in the HTML (Hypertext Markup Language).

In case the text of the received PUSH message is written in the HTML, execution proceeds to step 207. Otherwise, execution proceeds to step 210.

Step 207 : The PUSH message analysis processing means 105 checks whether in-line image information is detected indicating that image data is inserted in the HTML contents and whether a request for acquiring the image data indicated in the in-line image information has not been made. In case such a request has not been made, execution proceeds to step 208. Otherwise, execution proceeds to step 210.

Step 208 : The PUSH message analysis processing means 105 notifies the PUSH message request processing means 104 that the HTML contents received from the server unit contains non-acquired image data. The PUSH message request processing means 104 makes a non-acquired image data acquisition request to the Web protocol processing means 102. The Web protocol processing means 102, based on a request from the PUSH message request processing means 104, creates the acquisition request data in HTTP format negotiated with the server, then asks the data transmitting/receiving means 101 to send the data. The data transmitting/receiving means 101 sends the data asked by the Web protocol processing means 102 to the server unit, and execution proceeds to step 209.

Step 209 : The data transmitting/receiving means 101, on receiving the data from the server unit, notifies the received data to the Web protocol processing means 102. The Web protocol processing means 102, on receiving the PUSH messages transmitted from the server in accordance with the HTTP format, notifies completion of receiving the PUSH messages to the PUSH message analysis processing means 105. In case the PUSH message analysis processing means 105, based on the PUSH message receiving completion notice from the Web protocol processing means 102, has successfully acquired the in-line image information, the PUSH message analysis processing means 105 saves the image data information. Execution then proceeds to step 207. Otherwise, the PUSH message analysis processing means 105 skips saving the image data information. Execution then proceeds to step 207.

Step 210 The PUSH message analysis processing means 105, based on the information about presence or absence of non-acquired first information service message contained in the received PUSH messages in the server. In case non-acquired first information service message is present in the server, execution proceeds to step 202. Otherwise, execution proceeds to step 301 in Fig. 4.

Hereinafter, processing for acquiring PUSH messages in accordance with the flowchart in Fig. 4 will be described.

Step 301 : The PUSH message request processing means 104 checks the PUSH message type information contained in the PUSH message incoming notice transmitted from the data transmitting/receiving means 101. In case the PUSH message type information contains the second information service message, execution proceeds to step 302. Otherwise, execution terminates.

Step 302 The PUSH message request processing means 104 makes an inquiry about presence or absence of the available area in the memory for the second information service message to the PUSH message managing means 106. The PUSH message managing means 106 checks for available area in the memory of the PUSH message save means 103 for the second information service message, and notifies the result of the check for available memory. In case available memory is present in the memory for the second information service message , execution proceeds to step 303. Otherwise, execution terminates.

Step 303 : The PUSH message request processing means 104 makes a second information service message acquisition request to the Web protocol processing means 102. The Web protocol processing means 102, based on a request from the PUSH message request processing means 104, creates the second information service message acquisition request data in HTTP format negotiated with the server, then asks the data transmitting/receiving means 101 to send the data. The data transmitting/receiving means 101 sends the data asked by the Web protocol processing means 102 to the server unit, and execution proceeds to step 304.

Step 304 : The data transmitting/receiving means 101, on receiving the data from the server unit, notifies the received data to the Web protocol processing means 102. The Web protocol processing means 102, on receiving the PUSH messages transmitted from the server in accordance with the HTTP format, notifies completion of receiving the PUSH messages to the PUSH message analysis processing means 105. In case the PUSH message analysis processing means 105, based on the PUSH message receiving completion notice from the Web protocol processing means 102, has successfully acquired the second information service message, execution proceeds to step 305.

Otherwise, execution terminates.

Step 305 : The PUSH message managing means 106, based on the request from the PUSH message analysis processing means 105, saves the received second information service message in the memory in the PUSH message save means 103 for the second information service message. Execution then proceeds to step 306.

Step 306 : The PUSH message analysis processing means 105, based on the contents type information contained in the received PUSH message, checks whether the text of the received PUSH message is written in the HTML (Hypertext Markup Language). In case the text of the received PUSH message is written in the HTML, execution proceeds to step 307. Otherwise, execution proceeds to step 310.

Step 307 : The PUSH message analysis processing means 105 checks whether in-line image information is detected indicating that image data is inserted in the HTML contents and whether a request for acquiring the image data indicated in the in-line image information has not been made. In case such a request has not been made, execution proceeds to step 308. Otherwise, execution proceeds to step 310.

Step 308 : The PUSH message analysis processing means 105 notifies the PUSH message request processing means 104 that the HTML contents received from the server unit contains non-acquired image data. The PUSH message request processing means 104 makes a non-acquired image data acquisition request to the Web protocol processing means 102. The Web protocol processing means 102, based on a request from the PUSH message request processing means 104, creates the acquisition request data in HTTP format negotiated with the server, then asks the data transmitting/receiving means 101 to send the data. The data transmitting/receiving means 101 sends the data asked by the Web protocol processing means 102 to the server unit, and execution proceeds to step 309.

Step 309 : The data transmitting/receiving means 101, on receiving the data from the server unit, notifies the received data to the Web protocol processing means 102. The Web protocol processing means 102, on receiving the PUSH messages transmitted from the server in accordance with the HTTP format, notifies completion of receiving the PUSH messages to the PUSH message analysis processing means 105. In case the PUSH message analysis processing means 105, based on the PUSH message receiving completion notice from the Web protocol processing means 102, has successfully acquired the in-line image information, the PUSH message analysis processing means 105 saves the image data information. Execution then proceeds to step 307. Otherwise, the PUSH message analysis processing means 105 skips saving the image data information. Execution then proceeds to step 307.

Step 310 : The PUSH message analysis processing means 105, based on the information about presence or absence of non-acquired second information service message contained in the received PUSH messages in the server, checks for non-acquired second information service messages contained in the received PUSH message in the server. In case non-acquired second information service messages are present in the server, execution proceeds to step 302. Otherwise, execution terminates.

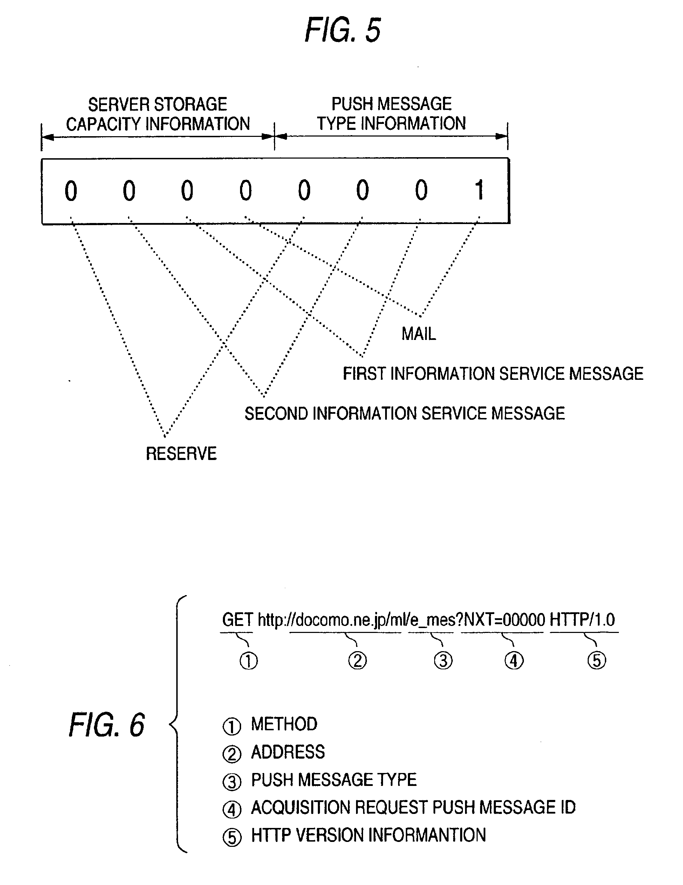

A particular operation of the receiver 1 which operates as mentioned earlier assumed when the receiver has received the PUSH message incoming notice in Fig. 5 will be described below.

Fig. 5 shows an example of information on a PUSH message contained in the PUSH message incoming notice according to the embodiment of the invention.

The PUSH message notice incoming notice is composed of PUSH message type information indicating the classification of PUSH messages, and server storage capacity information indicating whether PUSH message storage area is full or not in the server unit.

Types of PUSH messages in this embodiment comprise mail, first information service message, and second information service message. "1" indicates that non-acquired PUSH message is present in the server. "0" indicates that non-acquired PUSH message is absent in the server.

Now that the PUSH message type information is "0001", on-acquired data in the server unit is mail data only.

The PUSH message storage capacity information is accessory information to each PUSH message type. "1" indicates that the PUSH message storage capacity in the server is full.

Now that the PUSH message type information is "0000", the PUSH message storage capacity in the server is not full.

In case the data transmitting/receiving means 101 has received information on PUSH messages contained in the PUSH message incoming notice shown in Fig. 5, the information is notified to the PUSH message request processing means 104. The PUSH message request processing means 104 analyzes the description in the PUSH message incoming notice and determines that the server contains non-acquired mails (see step 101).

The PUSH message request processing means 104 makes an inquiry about whether available area is present in the mail memory or not to the PUSH message managing means 106. The PUSH message managing means 106 checks for available mail memory.

In case the mail memory in the PUSH message save means 103 is full of mails which have already been read and are unprotected, the mails can be overwritten and the memory is assumed to be available. In case the mail memory is available, a mail acquisition request is made (see step 103).

A particular example of the PUSH message (mail) acquisition request message is shown in Fig. 6. The PUSH message acquisition request message is configured in accordance with the HTTP request message. The HTTP request message is composed of a method to indicate the processing request details, URL information to locate the destination and HTTP version information.

In the PUSH message (mail) acquisition request message in Fig. 6, the method to indicate the processing request details is "GET", which indicates a contents acquisition request. The URL information contains the destination address, PUSH message type and acquisition request PUSH message ID. The PUSH message type "e_mes" indicates that the PUSH message as an object of acquisition request is a mail. The acquisition request PUSH message ID is represented in five digits following "NXT=". Note that "00000" is an ID indicating start of a PUSH message acquisition request. "HTTP/1.0" indicates that the HTTP version is 1.0.

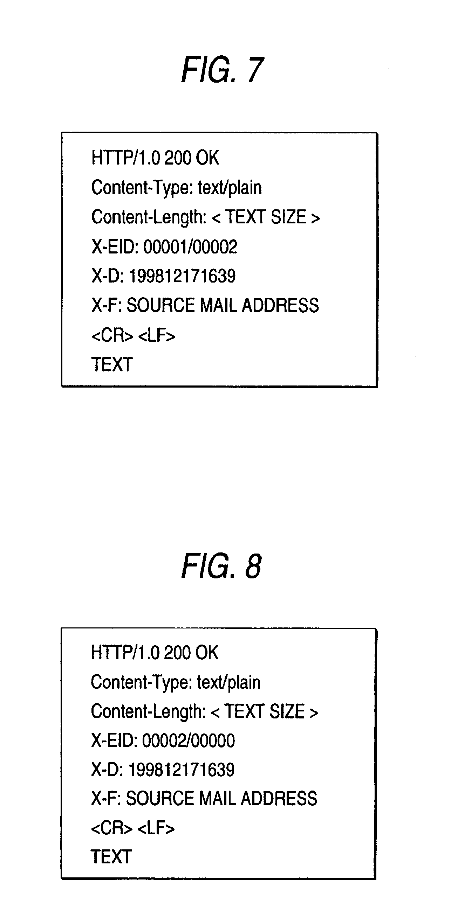

Fig. 7 shows a first particular example of the PUSH message acquired from a server conforming to the HTTP response format.

HTTP response data is composed of a response line, header, and body which corresponds to a text. The first line is a response line and composed of HTTP version information, status code of processing results on the request, and explanation on the status code.

In the example shown in Fig. 7, the HTTP version is 1.0, as understood from "HTTP/1.0". The status code "200", indicating that the request has been accepted by the server and text data is valid data for the request. "OK" is an explanation of the status code.

From the second line to the vacant line indicated by <CR><LF>(0x0D,0x0A) correspond to header. "Content-Length" indicates the number of bytes of the text data.

"Content-Type" indicates the contents type of the text data. "text/plain" indicates a plain text. Header information starting with "X-" is header information expanded to acquire PUSH messages.

"X-EID" indicates the mail ID. The first half "00001" indicates the ID of the mail as acquired text data. The second half "00002" indicates the mail ID used to make an E-mail acquisition request next time.

"X-D" is date information and indicates the time when a PUSH message arrived at the server. "199812171639" indicates December 17, 16:39, 1998.

"X-F" indicates the source mail address

Fig. 8 shows a second particular example of the PUSH message acquired from a server. Same as the first specific example, the PUSH message conforms to the HTTP response format. "X-EID" which is header information expanded to acquire PUSH messages indicates a mail ID. The first half "00002" indicates the ID of mail which is acquired text data. The second half indicates the mail ID used to make an E-mail acquisition request next time. In Fig. 8, the second half is "00000", indicating that the server unit does not store any non-acquired mails.

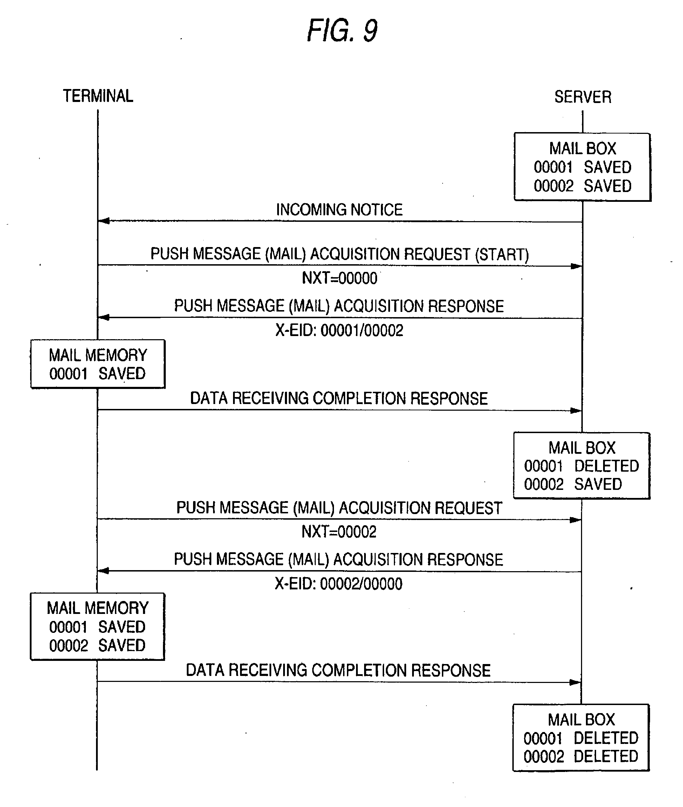

Fig. 9 is a sequence diagram showing the processing made between a receiving terminal and a server unit during data transmission made by the mobile terminal and the server unit via a network. This example shows a case where two mails destined for a receiver 1 are stored in the server unit.

The server assigns the mail IDs of two mails to 00001 and 00002 respectively. The server transmits a PUSH message incoming notice in order to notify the receiver 1 that non-acquired PUSH messages (mails) are stored in the receiver 1. Shown in the figure is a case where the PUSH message incoming notice is transmitted to the receiver 1.

In the receiver 1, based on the PUSH message incoming notice received via the data transmitting/receiving means 101 shown in Fig. 5, the PUSH message request processing means 104 sees the PUSH message type information mail as "1" and determines that non-acquired mails are stored in the server, then makes an inquiry about present or absence of available memory for acquisition of mails to the PUSH message managing means 106. Here, it is assumed that available memory for acquisition of mails is present in the PUSH message save means 103.

Because available memory for acquisition of mails can be reserved, the PUSH message request processing means 104 transmits to the server a PUSH message (mail) acquisition start request (see step 103).

The server unit, on receiving the PUSH message (mail) acquisition start request, transmits the first mail as a PUSH message shown in Fig. 7 to the receiver 1.

"X-EID:00001/00002" indicates that the first mail transmitted from the server unit to the receiver 1 corresponds to the mail having the mail ID "00001" stored in the server.

The second half "00002" is instruction information which indicates that non-transmitted mails are stored in the server unit, and instructs that the ID "00002" be used for a PUSH message (mail) acquisition request made by the receiver 1.

The receiving terminal, on receiving a PUSH message (mail) acquisition response, saves the received mails in the mail memory reserved in the PUSH message save means 103 (see step 105).

The receiver 1, on receiving the data transmitted from the server unit, transmits a data receiving completion response to the server unit via the data transmitting/receiving means 101.

The server, on receiving the data receiving completion response from the receiver 1, assumes that mail transmission to the receiver 1 is complete and deletes the mail having the mail ID "00001" in the mail box.

The receiver 1, checking that the mail ID to be requested next contained in the PUSH message (mail) acquisition response is other than "00000", determines that non-acquired mails are stored in the server unit (see step 106). To acquire mails again, a check is made to determine whether mail memory is available or not. In this case also, it is assumed that available memory is present in the PUSH message save means 103.

The receiver 1 transmits the PUSH message (mail) acquisition request "NXT=00002" to the server unit. The server unit, receiving the PUSH message (mail) acquisition request, transmits the mail having the mail ID: 00002 stored in the mail box to the receiver 1 as a PUSH message shown in Fig. 8.

In doing so, the mail box on the server does not store any non-transmitted mails. Thus transmission is made assuming the mail ID information as "X-EID: 00002/00000".

"00002" is the mail ID of the mail text being transmitted and the second half "00000" indicates that the server unit does not store any non-transmitted mails.

The receiver 1, on receiving the data transmitted from the server unit, transmits a data receiving completion response to the server via the data transmitting/receiving means 101.

The server, on receiving the data receiving completion request from the receiver 1, assumes that mail transmission to the receiver 1 is complete and deletes the mail having the mail ID "00002" in the mail box.

While in the embodiment, in determining whether the PUSH message memory is available or not by the PUSH message managing means 106, PUSH messages which have already been read and are unprotected can be overwritten and the memory is assumed to be available, overwriting can be disabled unless PUSH messages are deleted via user operation.

### Industrial Applicability

Thus, according to the invention, it is possible to provide a mobile terminal such as a portable telephone set equipped with relatively small data memory and a data transmission scheme adapted to receive PUSH messages provided by the information source at an arbitrary timing without fail.

## Claims

1. A mobile terminal being operable to receive an incoming notice, triggered by signals contained in said incoming notice showing the presence of a delivery message destined for said mobile terminal in a server unit, to make a delivery message acquisition request for acquiring said delivery message to said server unit, and to receive a delivery message acquisition response, including said delivery message, transmitted from said server unit based on said delivery message acquisition request;
**characterized in that**
if said mobile terminal determines, based on information contained in said received delivery message acquisition response showing the presence or absence of a next delivery message not acquired, that said next delivery message not acquired is present, said mobile terminal is operable to check whether or not sufficient memory is available in said mobile terminal for receiving said next delivery message, and in case available memory is present in the memory for said next delivery message, said mobile terminal is operable to make a next delivery message acquisition request to said server unit.

2. A mobile terminal according to claim 1, **characterized in that** said incoming notice contains a delivery message type showing a major classification of said delivery message, and that said mobile terminal makes a delivery message acquisition request to said server unit based on said delivery message type.

3. A mobile terminal according to claim 1, **characterized in that** said mobile terminal determines that, in case delivery messages saved in said mobile terminal have been read and are not protected, they can be overwritten by a new incoming delivery message and determines that the save area can be reserved in a decision whether the delivery message save area can be reserved or not.

4. A mobile terminal according to claim 2, **characterized in that** said delivery message type may be a mail.

5. A data transmission scheme whereby a mobile terminal and a server unit performs data transmission via a network, wherein the mobile terminal which receives an incoming notice, triggered by signals contained in said incoming notice showing the presence of a delivery message destined for said mobile terminal in a server unit, makes a delivery message acquisition request for acquiring said delivery message to said server unit, and receives a delivery message acquisition response, including said delivery message, transmitted from said server unit based on said delivery message acquisition request;
**characterized in that**
if said mobile terminal determines, based on information contained in said received delivery message acquisition response showing the presence or absence of a next delivery message not acquired, that said next delivery message not acquired is present, said mobile terminal checks whether or not sufficient memory is available in said mobile terminal for receiving said next delivery message, and in case available memory is present in the memory for said next delivery message, said mobile terminal makes a next delivery message acquisition request to said server unit.

## Patentansprüche

1. Mobil-Endgerät, das in Funktion eine eingehende Mitteilung empfangen kann, ausgelöst durch Signale, die in der eingehenden Mitteilung enthalten sind und das Vorhandensein einer für das Mobil-Endgerät bestimmten Zustellungs-Nachricht in einer Server-Einheit anzeigen, eine Anforderung zum Beziehen einer Zustellungs-Nachricht an die Server-Einheit stellen kann, um die Zustellungs-Nachricht zu beziehen, und eine Antwort zum Beziehen einer Zustellungs-Nachricht empfangen kann, die die Zustellungs-Nachricht enthält und von der Server-Einheit auf Basis der Anforderung zum Beziehen einer Zustellungs-Nachricht gesendet wird;
**dadurch gekennzeichnet, dass**
wenn das Mobil-Endgerät auf Basis von Informationen, die in der empfangenen Antwort zum Beziehen einer Zustellungs-Nachricht enthalten sind und das Vorhandensein oder Nichtvorhandensein einer nächsten nicht bezogenen Zustellungs-Nachricht anzeigen, feststellt, dass die nächste nicht bezogene Zustellungs-Nachricht vorhanden ist, das Mobil-Endgerät in Funktion prüfen kann, ob in dem Mobil-Endgerät ausreichend Speicher zum Empfangen der nächsten Zustellungs-Nachricht verfügbar ist oder nicht, und wenn verfügbarer Speicher in dem Speicher für die nächste Zustellungs-Nachricht vorhanden ist, das Mobil-Endgerät in Funktion eine nächste Anforderung zum Beziehen einer Zustellungs-Nachricht an die Server-Einheit stellen kann.

2. Mobil-Endgerät nach Anspruch 1, **dadurch gekennzeichnet, dass** die eingehende Mitteilung einen Typ der Zustellungs-Nachricht enthält, der eine Ober-Einteilung der Zustellungs-Nachricht anzeigt, und dass das Mobil-Endgerät eine Anforderung zum Beziehen einer Zustellungs-Nachricht an die Server-Einheit auf Basis des Typs der Zustellungs-Nachricht stellt.

3. Mobil-Endgerät nach Anspruch 1, **dadurch gekennzeichnet, dass** das Mobil-Endgerät, wenn in dem Mobil-Endgerät gespeicherte Zustellungs-Nachrichten gelesen worden sind und nicht geschützt sind, bestimmt, dass sie durch eine neue eingehende Zustellungs-Nachricht überschrieben werden können, und in einer Entscheidung darüber, ob der Speicherbereich für Zustellungs-Nachrichten reserviert werden kann oder nicht, bestimmt, dass der Speicherbereich reserviert werden kann.

4. Mobil-Endgerät nach Anspruch 2, **dadurch gekennzeichnet, dass** der Typ der Zustellungs-Nachricht eine Mail-Nachricht sein kann.

5. Daten-Sendeverfahren, mit dem ein Mobil-Endgerät und eine Server-Einheit Senden von Daten über ein Netzwerk durchführen, wobei das Mobil-Endgerät, das eine eingehende Mitteilung erhält, ausgelöst durch Signale, die in der eingehenden Mitteilung enthalten sind und das Vorhandensein einer für das Mobil-Endgerät bestimmten Zustellungs-Nachricht in einer Server-Einheit anzeigen, eine Anforderung zum Beziehen einer Zustellungs-Nachricht an die Server-Einheit stellt, um die Zustellungs-Nachricht zu beziehen, und eine Antwort zum Beziehen einer Zustellungs-Nachricht empfängt, die die Zustellungs-Nachricht enthält und von der Server-Einheit auf Basis der Anforderung zum Beziehen einer Zustellungs-Nachricht gesendet wird;
**dadurch gekennzeichnet, dass**
wenn das Mobil-Endgerät auf Basis von Informationen, die in der empfangenen Antwort zum Beziehen einer Zustellungs-Nachricht enthalten sind und das Vorhandensein oder Nichtvorhandensein einer nächsten nicht bezogenen Zustellungs-Nachricht anzeigen, feststellt, dass die nächste nicht bezogene Zustellungs-Nachricht vorhanden ist, das Mobil-Endgerät prüft, ob in dem Mobil-Endgerät ausreichend Speicher zum Empfangen der nächsten Zustellungs-Nachricht verfügbar ist oder nicht, und, wenn verfügbarer Speicher in dem Speicher für die nächste Zustellungs-Nachricht vorhanden ist, das Mobil-Endgerät eine nächste Anforderung zum Beziehen einer Zustellungs-Nachricht an die Server-Einheit stellt.

## Revendications

1. Terminal mobile pouvant être actionné pour recevoir une notification entrante, déclenché par des signaux contenus dans ladite notification entrante indiquant la présence d'un message de remise destiné audit terminal mobile dans une unité de serveur, pour effectuer une demande d'acquisition de message de remise pour acquérir ledit message de distribution vers ladite unité de serveur, et pour recevoir une réponse d'acquisition de message de remise, incluant ledit message de remise, transmis par ladite unité de serveur en se basant sur ladite demande d'acquisition de message de remise ;
**caractérisé en ce que**
si ledit terminal mobile détermine, en se basant sur les informations contenues dans ladite réponse d'acquisition de message de remise reçu indiquant la présence ou l'absence d'un message de remise suivant non acquis, que ledit message de remise suivant non acquis es présent, ledit terminal mobile peut être actionné pour vérifier si une mémoire suffisante ou non est disponible dans ledit terminal mobile pour recevoir ledit message de remise suivant, et dans le cas où de la mémoire disponible est présente dans la mémoire pour ledit message de remise suivant, ledit terminal mobile peut être actionné pour effectuer une demande d'acquisition de message de remise suivant à ladite unité de serveur.

2. Terminal mobile selon la revendication 1, **caractérisé en ce que** ladite notification entrante contient un type de message de remise représentant une classification majeure dudit message de remise, et **en ce que** ledit terminal mobile effectue une demande d'acquisition de message de remise à ladite unité de serveur en se basant sur ledit type de message de remise.

3. Terminal mobile selon la revendication 1, **caractérisé en ce que** ledit terminal mobile détermine que dans le cas où des messages de remise sauvegardés dans ledit terminal mobile ont été lus et ne sont pas protégés, ils peuvent être écrasés par un nouveau message de remise entrant et détermine que la zone de sauvegarde peut être réservée lors d'une décision du fait que la zone de sauvegarde de message de remise peut être réservée ou non.

4. Terminal mobile selon la revendication 2, **caractérisé en ce que** ledit type de message de remise peut être un courrier électronique.

5. Aménagement de transmission de données tel qu'un terminal mobile et une unité de serveur effectuent une transmission de données par l'intermédiaire d'un réseau, dans lequel le terminal mobile qui reçoit une notification entrante, déclenchée par des signaux contenus dans ladite notification entrante indiquant la présence d'un message de remise destiné audit terminal mobile dans une unité de serveur, effectue une demande d'acquisition de message de remise pour acquérir ledit message de remise vers ladite unité de serveur, et reçoit une réponse d'acquisition de message de remise, incluant ledit message de remise, transmise par ladite unité de serveur en se basant sur ladite demande d'acquisition de message de remise ;
**caractérisé en ce que**
si ledit terminal mobile détermine, en se basant sur les informations contenues dans ladite réponse d'acquisition de message de remise reçu montrant la présence ou l'absence d'un message de remise suivant non acquis, que ledit message de remise suivant non acquis est présent, ledit terminal mobile vérifie si une mémoire suffisante ou non est disponible dans ledit terminal mobile pour recevoir ledit message de remise suivant, et dans le cas où de la mémoire disponible est présente dans la mémoire pour ledit message de remise suivant, ledit terminal mobile effectue une demande d'acquisition de message de remise suivant à ladite unité de serveur.
